Europäisches Patentamt

European Patent Office

Office européen des brevets

(11) Publication number: **0 204 301**
**B1**

## (12) EUROPEAN PATENT SPECIFICATION

(45) Date of publication of patent specification: **31.10.90**

(21) Application number: **86107458.1**

(22) Date of filing: **02.06.86**

(51) Int. Cl.⁵: **F 16 L 3/04, H 02 G 3/24**

(54) Cable mounting apparatus and method.

(30) Priority: **03.06.85 US 740802**
**15.07.85 US 754574**
**03.12.85 US 804064**
**15.05.86 US 861778**

(43) Date of publication of application:
**10.12.86 Bulletin 86/50**

(45) Publication of the grant of the patent:
**31.10.90 Bulletin 90/44**

(84) Designated Contracting States:
**AT BE CH DE FR GB IT LI NL SE**

(56) References cited:
**WO-A-83/03721**
**US-A-3 241 797**
**US-A-4 127 250**

(73) Proprietor: **Mangone, Peter G., Jr.**
**28600 Buchanan Drive**
**Evergreen Colorado (US)**

(72) Inventor: **Mangone, Peter G., Jr.**
**28600 Buchanan Drive**
**Evergreen Colorado (US)**

(74) Representative: **Baillie, Iain Cameron et al**
**c/o Ladas & Parry Isartorplatz 5**
**D-8000 München 2 (DE)**

Courier Press, Leamington Spa, England.

**Description**

This invention relates to the field of fastening cable to a surface and in particular to fastening sensitive signal conducting insulated cable to a surface.

A common part of installing electronic equipment is the fastening of cable, such as the cable used in the telecommunications industry, to a surface such as a wall, a floor, a baseboard or other similar surfaces. The recent expansion of the telecommunication industry has caused an increase in the amount of sensitive cable being fastened to surfaces and has made more acute the need for a tool that conveniently, effectively and safely attaches such cable to surfaces and has made more acute the need for a tool that conveniently, efficiently and safely attaches such cable to a surface in a quick and efficient manner without damaging the cable.

Previous methods of fastening cable to a surface have made use of individual, manually applied clips or conventional staple guns. The use of manually applied clips to attach cable to a surface has proved to be time consuming and labor intensive, making this method economically unattractive. Attachment of cable by using a conventional staple gun is faster and more economical than use of clips, but it has been found that stapling may have a harmful effect on the cable, impairing its electrical characteristics and possibly creating safety concerns.

A conventional staple gun ejects a metal staple and often a point of the staple may lacerate the protective insulation as it passes next to the cable, or the force that must be utilized in this process may cause the cross member of the staple to crimp or cut through the insulating layer of the cable that houses the conducting wires. Thus the metal staple may cut the insulating layer thereby exposing the conducting wire and allowing moisture ingress, or it may crush the cable sufficiently to impair its ability to accurately transmit signals or it may actually sever one of the conducting wires. Furthermore, the amount of force imparted to the cable by the staple depends on the size of the cable against which it is coming into contact and the resistance offered by the surface into which the staple legs must penetrate. Therefore, a stapler with an ejection force appropriate to accommodate one cable size or one density of surface material may need adjustment before it can be safely used in another cable environment. The most common method presently in the installation of sensitive cable is by the use of individual, manually applied clips. The need exists to make the installation of cable faster and easier while substantially eliminating crushing or severing of the cable insulation or the conducting wires.

U.S. Patent 3,241,797 and PCT Application No. PCT/SE83/00111 [WO83/03721] respectively relate to a staple or strap and to a tool for applying such items. However, neither specification makes provision for reliable means for retaining such items in juxtaposition.

In operation the slot in the base member of the housing assembly is positioned over the cable. The staple gun trigger lever is activated so as to move the forwardmost staple in the staple gun downward so that the staple legs pass through the holes in the feed of the underlying encasement. The force of the ejected staple carries the encasement downward out of the staple gun so that the feet of the encasement contact the surface. The staple legs penetrate through the holes in the feet of the encasement into the surface to affix the encasement in an upright position. In this position, the slot in the underside of the encasement, in combination with the surface, defines a channel in which the cable lies. As a result, the encasement legs and cross member keep the staple spaced from the cable so that the cable is not contacted by the staple. In this manner of operation, substantially all of the momentum of the staple ejected from the staple gun is absorbed by the encasement and surface, rather than allowing the force of this momentum to be transmitted to the cable.

In general, the present invention provides a system and apparatus for rapid automated fastening of cable to a support surface by the use of a new and improved cable holding and attachment clip. The word, clip, as used in this application, comprises an insulated, protective housing that unitarily embodies surface penetrating fastening devices in such a manner so as to allow the clips to be positioned, discharged and applied in a uniform automated process. The invention also provides a new and improved applicator tool (gun-like stapling devices) which holds and positions a plurality of the clips to accurately, economically and safely fasten a cable to a support surface.

According to the present invention there is provided a system for fastening a cable on a support surface by means of a cable accommodating clip applied by an applicator tool, a plurality of clips, severably retained in a row in abutting side-by-side relationship.

According the present invention there is provided a system for use in fastening a cable on a support surface comprising a plurality of clips joined together in a row, each clip having a channel in its bottom surface for receiving the cable and surface penetrating fastening devices mounted in respective bores extending from the top surface to the bottom surface of the clip, an applicator tool including a feed track for supporting the row of clips such that an end clip (A) is positioned at ta discharge shoot, the applicator tool also including hammer means for applying a force to the surface penetrating fastening devices of the end clip (A) to derive them out through the bores and into the support surface thereby retaining the end clip (A) on the support surface, characterized in that the clips are held together by interlocking ribs and grooves such that the end clip (A) remains attached to the row of clips after operation of the hammer means until the applicator tool is removed by sliding the ribs longitudinally out of the groove between the end clip (A) and the other clip (B) in the row.

According to a further aspect of the invention there is provided a method of fastening a cable on a support surface involving use of such a system, characterized by the steps of positioning the applicator tool so that the end clip (A) is in position above the cable, operating the hammer means thereby driving the surface penetrating fastening devices into the support surface and then removing the applicator tool by sliding the ribs out of the grooves between the end clip (A) and its adjacent clip (B) in the row whereby the end clip (A) remains attached to the row of clips until the applicator tool is removed.

In a preferred embodiment of the invention, the insulated, protective housing of the clip is of a hexahedral configuration having parallel top and bottom surfaces, parallel side surface and parallel front and rear surfaces. A cable receiving and holding channel is provided in the bottom surface. A pair of spaced apart bore means extend through the protecting housing portion of the clip between the top and bottom surfaces. Each bore means have cylindrical sections of different diameters so as to form an internal shoulder. The smaller diameter cylindrical section terminates in a conical section and is located closer to the bottom surface of the housing than to the top surface. Surface penetrating fastening devices are mounted in the bore means with a portion of each device frictionally engaged in the smaller diameter conical-cylindrical section and the head of the device positioned in the larger diameter cylindrical section. Means are provided to hold adjacent clips in an assembled relationship. In a preferred embodiment of the invention, this holding means comprises interlocking ribs on one of the surfaces of the housing of a clip located within interlocking grooves in the opposing surfaces of the housing of an adjacent clip.

In another embodiment of the invention, a modified clip, which modified clip is not within the definition of the word, clip, set forth above, comprises a housing which is integrally molded using a suitable plastic material and has a cable receiving and holding channel provided in its bottom surface. The housing has a central portion and two legs each of which extend outwardly from the sides of the housing. Bore means extend through each of the legs. Surface penetrating fastening devices are mounted in the bore means with a portion of each surface penetrating fastening device frictionally engaged in the bore means.

In another embodiment of the invention, a modified clip, which modified clip is not within the definition of the word, clip set forth above, comprises an insulated, protective housing which is integrally molded using a suitable plastic material and has a cable receiving and holding channel provided in its bottom surface. The insulated, protective housing is of a hexahedral configuration having parallel top and bottom surfaces, parallel side surfaces and parallel top and bottom surfaces. A pair of spaced apart bore means extend through the insulated protective housing between the top and bottom surfaces. The upper portion of each bore means closer to the top surface is rectangular in cross-section and the lower portion of each bore means closer to the bottom surface is circular in cross-section. The surface penetrating fastening device is a T-nail having a head which is rectangular in cross-section and a shank that is cylindrical in cross-section. A T-nail is positioned in each bore means and is retained therein by frictional engagement between a portion of the shaft of the T-nail and the circular portion of the bore means. Either the upper portion or all of the head of the T-nail extends above the top surface of the insulated, protective housing or a portion of the shaft of the T-nail extends below the bottom surface of the insulated, protective housing.

An applicator tool is provided for positioning, ejecting and fastening a clip or a modified clip over a cable. This applicator tool operates similarly to a conventional stapling device. A multiplicity of clips are joined together and positioned in a feed track means. A spring biasing means acts on the multiplicity of clips to position the foremost clip above a discharge chute. The applicator tool is positioned over the cable and activated so as to drive a means into contact with portions of the surface penetrating fastening devices of the clip and substantially simultaneously move the clip downwardly until it is in a fastened position around the cable and is resting on the surface on which the cable is to be fastened. Repeated activations of the driving means of the applicator tool may be needed to adequately penetrate the surface so that the clip is properly fastened on the surface.

In the accompanying drawings:

Fig. 1 is a pictorial view illustrating a portion of an applicator tool for use with this invention;

Fig. 2 is a side view of a portion of an applicator tool positioned over a cable;

Fig. 3 is a front elevational view of a clip;

Fig. 4 is a top plan view of Fig. 3 with the surface penetrating fastening devices removed;

Fig. 5 is a cross-sectional view along the line 5-5 of Fig. 4 with surface penetrating fastening devices positioned therein;

Fig. 6 is a cross-sectional view of a portion of the applicator tool along the line 7-7 of Fig. 1;

Fig. 7 is a side elevational view with parts removed and parts in cross-section of a portion of the applicator tool having clips mounted therein;

Fig. 8 — 11 are pictorial views illustrating the clip during various stages of its application.

Fig. 12 is a front elevational view of a modified clip;

Fig. 13 is a top plan view of Fig. 12 with the surface penetrating devices removed;

Fig. 14 is a cross-sectional view along the lines 14-14 of Fig. 13;

Fig. 15 illustrates the clip of Figs. 12—14 in use;

Fig. 16 is top plan view illustrating another modification of the clip;

Fig. 17 is an enlarged cross-sectional view along the line 17-17 of Fig. 16 with surface penetrating fastening devices positioned therein;

Fig. 18 is an enlarged cross-sectional view along the line 17-17 of Fig. 17 with surface penetrating fastening devices positioned therein;

Fig. 19 is an enlarged front elevational view of a surface penetrating fastening device for use in this invention;

Fig. 20 is a side elevational view of Fig. 19; and

Fig. 21 is a bottom plan view of Fig. 19.

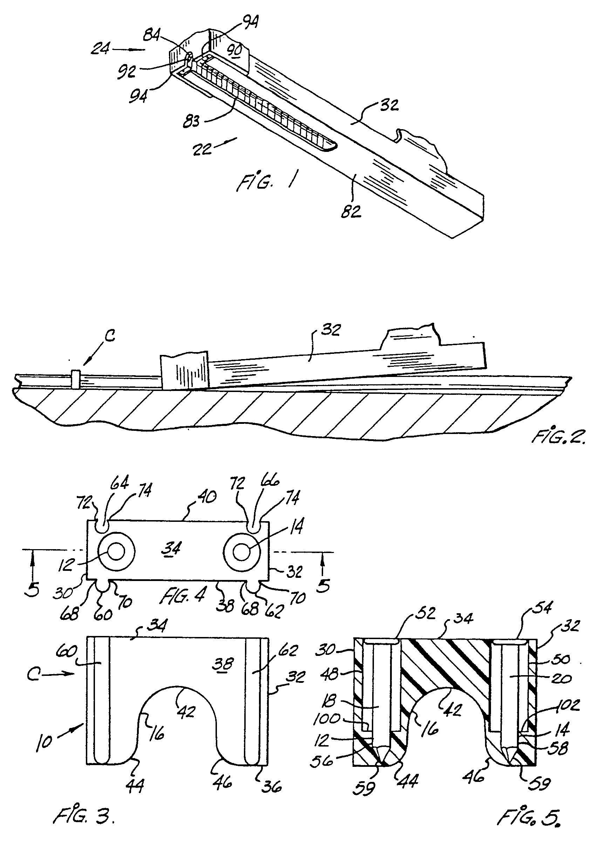

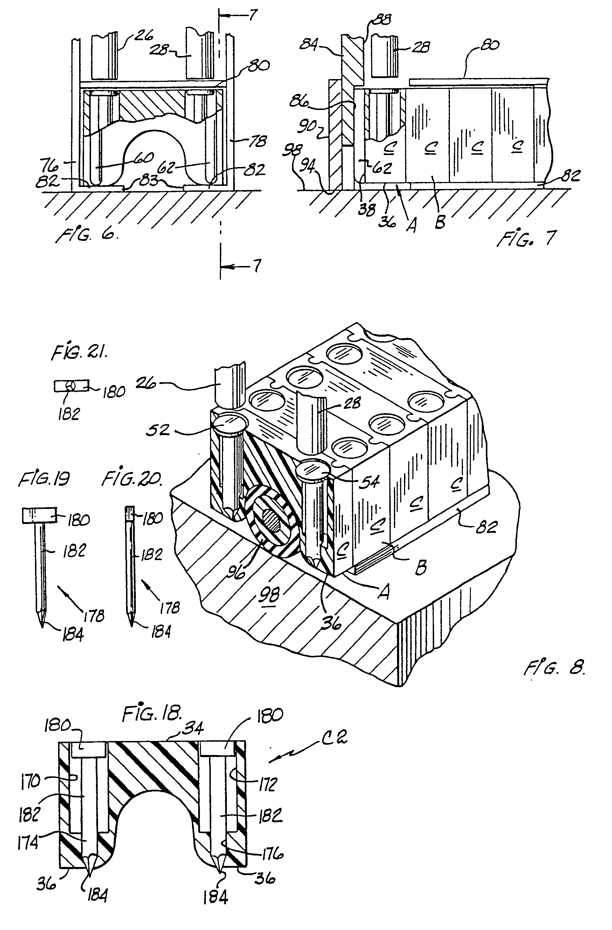

In general, the clip of the present invention comprises an insulated, protective housing 10 integrally molded using a plastic material and has a pair of bore means 12 and 14 located on opposite sides of a cable receiving channel means 16. The surface penetrating fastening devices in the preferred embodiment of the clip of this invention comprise a pair of nails 18 and 20 which are held and supported in a non-fastening position completely within bore means 12 and 14 prior to being driven into a support structure on opposite sides of a cable, such as a telecommunications cable, confined in channel means 16. It is understood that other types of fastening means may be used. The clip may be manufactured by forming the one piece clip member in situ about the nail members by an injection molding process or the like; or by a two-step assembly process whereby the nails are placed in the housing after the formation of the housing. A portion of an applicator tool 22 is illustrated in Figs. 1 and 2 and comprises an elongated upper drive section 24 having a reciprocable means including a pair of hammer portions 26 and 28 illustrated in Figs. 6 and 7. An elongated lower jaw section 32 provides a channel and guideway for slidably supporting a stack of the clips 10 which are held therein in adjacent abutting relationship for one by one sliding movement from a plurality of stored positions to a position in alignment with the hammer portions 26 and 28. The details of the applicator tool form no part of this invention, but it is understood that the applicator tool, except for modifications specifically described herein, will appear and function similar to conventional staple guns such as those manufactured by Duo-Fast.

The housing 10 comprises a block of suitable plastic material, such as polypropylene or polycarbonate, having a length, width and depth and in a preferred embodiment of the invention is a hexahedron having parallel side surfaces 30 and 32, parallel top and bottom surfaces 34 and 36, and parallel front and rear surfaces 38 and 40. It is to be understood that the housing block can be of other geometrical configurations. A central channel means 16 extends between the front and rear surfaces 38 and 40 and has an arcuate surface 42 with a radius of curvature approximately equal to the radius of curvature of a cable to be received therewithin. The channel means 16 also has outwardly curved terminal surface portions 44 and 46 to facilitate positioning over the cable means. The construction and arrangement is such as to enable the cable to fit completely in the channel means 16 with opposite parallel abutment surfaces of the bottom surface 36 located laterally beyond the outer periphery of the cable means so that when a clip is properly positioned over a cable and fastened to the supporting surface, a portion of the clip is in frictional abutting engagement with a portion of the cable, a portion of the cable is in frictional abutting engagement with a portion of the support surface and the bottom surface 36 of clip in contact with the supporting surface.

Each of the bore means 12 and 14 is in the form of a counter bore having a first elongated relatively large diameter bore portion 48 and 50 and a second relatively short length and relatively small diameter portion, identified above and hereafter as 12 and 14. The diameter of bore portion 48 and 50 is slightly greater than the diameter of the head 52 and 54 of the nails 18 and 20. The diameter of bore portions 12 and 14 is slightly less than the diameter of nail shafts 56 and 58. This combination functions to locate the nails in proper position for contact by the hammer portions 26 and 28. As illustrated in Fig. 3, a conical section 59 is provided in the bore portions 12 and 14 adjacent to the bottom surface 36 and is shaped so that the head of each shaft may be positioned therein. The conical section 59 is joined at the bottom to seal the bore portions 12 and 14 to form a mass into which the points of the nails 18 and 20 can be embedded to provide an additional nail restraining means. Each nail 18 and 20 is temporarily held in its associated bore means by frictional engagement with circumjacent portions of the bores with both the heads and the shafts located completely within the peripheral confines of the housing 10 of the clip C. Thus, the clip can be packaged and handled like staples and used like staples in a staple-type applicator tool having drive hammer portions 26 and 28 which enter bore portions 48 and 50 to engage and drive the nails 18 and 20 into the support surface. If desired, the nails 18 and 20 can be of other configurations, such as a T-shaped head, the bore means can be of other configurations, such as to rectangular, and the hammer portions can be of other configurations, such as rectangular.

The housing 10 is provided with means so that one clip can be interlocked with an adjacent clip. The interlocking means comprises a pair of spaced apart ribs 60 and 62 projecting outwardly from the front surface 38 and a pair of spaced apart grooves 64 and 66 formed in the rear surface 40. It is understood that the interlocking means can comprise one or more ribs and one or more cooperating grooves. The interlocking ribs 60 and 62 are generally circular in cross-sectional configuration and have an arcuate peripheral surface extending for an arcuate distance of between about 185 degrees and 345 degrees so as to form notches 68 and 70 between the peripheral surfaces of the ribs 60 and 62 and the front surface 38. The interlocking grooves 64 and 66 are generally circular in cross-sectional configuration and have an arcuate surface extending for an arcuate distance of between about 185 degrees and 345 degrees with a slot entering into the interlocking grooves 64 and 66 so as to form resilient flange portions 72 and 74. Adjacent clips are interlocked by pushing the interlocking ribs 60 and 62 into the interlocking grooves 64 and 66 until the front surface 38 of one clip is in contact with the rear surface 40 of an adjacent clip. In the assembled relationship, the resilient flange portions 72 and 74 are seated in the notches 68 and 70 so as to hold the adjacent clips in the assembled relationship. While the interlocking grooves 64 and 66 have been described with arcuate surfaces, the grooves only have to have a cross-sectional area to accommodate the interlocking ribs and can be of any geometrical configuration as long as the appropriate flange portions 72 and 74 are provided.

The mounting of a multiplicity of clips C during the application of the clips is schematically illustrated in Figs. 6 and 7. A multiplicity of clips C in assembled relationship are positioned in multiple clip feed track means comprising vertical plates 76 and 78 and horizontal plates 80 and 82. The plate 82 is provided with a slot 83 so that when the applicator tool is positioned over a cable, a portion of the cable will extend through the slot 83 and be received in the cable receiving channel means 16 of the clip. This allows the clips C to be positioned only slightly above the support surface prior to being applied to the support surface. In some instances, the slot 83 extends for a distance less than half the length of the plate, but, if desired, the slot 83 can be longer and could extend for the full length of the plate 82. In this construction, the applicator tool can be parallel to the support surface rather than the angled relationship illustrated in Fig. 2. Spring means (not shown) urge the assembled clips into contact with the front wall 84 of the applicator tool 22. The front wall 84 is provided with a pair of grooves 86 for receiving the interlocking ribs 60 and 62 so that the front surface 38 is in contact with the surface 88 of the front wall 84. In the clip illustrated in Figs. 3-5, the housing 10 is symmetrical so that, if the assembled clips are positioned backwards in the multiple clip feed track means, the rear surface 40 of each clip will contact the surface 88 and the hammer portions 26 and 28 will be aligned with the bore portions 48 and 50. An attachment 90 is located adjacent to the front wall 84 and is provided with a notch 92 and a supporting base 94. If desired, the attachment 90 is not used and the notch 92 is in the front wall 84. In any event, the front wall will have a notch mating with the notch 92. The distance between the notch 92 and the supporting base 92 is slightly greater than the diameter of the cable 96. The notch 92 is used with the slot 83 to properly align the applicator tool means 22 so that the clip C will be properly positioned relative to the cable 96.

As illustrated in Figs. 7 and 8, the clip C in position A is ready to be applied over the cable 96. The spring means (not shown) is holding the front surface 38 against the surface 84 with the interlocking ribs 60 and 62 seated in grooves 86. When the applicator tool 22 is actuated, the hammer portions 26 and 28 will move downwardly into contact with the heads 52 and 54. The frictional force between the shafts 56 and 58 and the relatively small bore portions 12 and 14 is sufficiently great so that the clip C in position A will move relative to the clip C in position B in a downwardly direction. Movement of the clip in position B is prevented by the portions of the horizontal plate 82 on either side of the slot 83. The clip in position A will continue in the downward direction until the bottom surface 36 of the clip contacts the support surface 98. The cycle of operation during the application of a clip over a cable is explained below in relation to Figs. 9 — 11.

As illustrated in Fig. 9, the bottom surface 36 of the clip C is in contact with the support surface 98 and the driving force of the hammer portions 26 and 28 has driven the nails 18 and 20 downwardly into the surface 98 so that the heads 52 and 54 have moved about half way into the relatively large diameter bore portions 48 and 50 between the top surface 34 and the annular shoulders 100 and 102 formed at the junction of the relatively large diameter bore portions 48 and 50 and the relatively small diameter bore portions 12 and 14. The applicator tool device may continue to repeat the blows by the hammer portions 26 and 28 on the heads 52 and 54 of the nails 18 and 20 until the heads 52 and 54 are in contact with the annular shoulders 100 and 102 as illustrated in Fig. 10. During the downward driving of the nails 18 and 20, the heads 52 and 54 thereof in cooperation with the sidewall of the bore portions 48 and 50 and the shafts 56 and 58 in cooperation with the bore portions 12 and 14 form spaced apart guide means to ensure that the heads 52 and 54 are properly positioned to be struck by the hammer portions 26 and 28.

As illustrated in Fig. 10, when the clip C is in its final applied position over the cable 96 so that the surface 42 is in contact with the peripheral surface of the cable 96, a portion of the interlocking ribs 60 and 62 on the clip C in position B is still in the interlocking relationship within the interlocking grooves 64 and 66 in the clip C in position A. The applicator tool device 22 is moved in a vertical direction so as to slide the interlocking ribs 60 and 62 out of the interlocking grooves 64 and 66. The spring means (not shown) acts on the assembled clips C so that the clip C previously in position B now moves into position A.

The arcuate surface 42 of the channel means 16 is a semi-circle having a diameter slightly less than the diameter of the cable 96. The distance between the top of the arcuate surface 42 and the bottom surface 36 of the clip with nails 10 is also slightly less than the diameter of the cable 96. Therefore, when the clip C is in the applied position over the cable, there will be frictional forces between the surface of the cable 96 in contact with the arcuate surface 42 and the surface of the cable 96 in contact with the support surface 98 so that relative movement between the cable 96, the clip C and the support surface 98 is resisted.

In one embodiment of the invention, the clip has a housing 10 which is integrally molded from a polypropylene material and has a length between the side portions 30 and 32 of about 0.590 inch; a width between the front 38 and rear 40 surfaces of about 0.180 inch; and a depth between the top 34 and bottom surfaces of about 0.400 inch. The large bore portions 48 and 50 have internal diameter of about 0.115 inch and the small bore portions have diameters of about 0.0475 inch. Each of the nails 18 and 20 has a length of about 0.400 inch with the diameter of the head being about 0.110 inch and the diameter of the shank being about 0.0475 inch. The arcuate surface 42 has a diameter of about 0.265 inch. This clip is suitable for use with a cable having an outer diameter of about 0.265 inch.

In the embodiment of the modified clip C 1 illustrated in Figs. 12 — 15, the housing 110 comprises a central portion 112 having a top surface 114 and side surfaces 116 and 118. Extending outwardly from the side surfaces 116 and 118 are legs 120 and 122 having bottom surfaces 124 and 126. The central portion 112 is provided with a cable receiving channel means 128 and has an arcuate surface 130 having a radius of curvature approximately equal to the radius of curvature of a cable to be received therewithin. The construction of the cable receiving channel means 128 is the same as the cable receiving channel means 16.

Bore means 132 and 134 are provided in the legs 120 and 122. Nails 136 and 138 are positioned in the bore means 132 and 134 and are retained therein by a frictional engagement between the surfaces of the bore means and the surfaces of the shafts of the nails. As illustrated in Fig. 14, the bore means 132 and 134 are similar to bore portions 12 and 14 in that a conical section 140 and 142 may be provided adjacent to the bottom surfaces 144 and 146 of the legs 120 and 122. Each of the conical sections 140 and 142 is provided with a mass of plastic material 144 and 146 adjacent to the bottom surfaces into which mass the points of the nails 136 and 138 are embedded to provide an additional nail retaining means. Although the heads of the nails 136 and 138 are located above the plane of the top surface 114 of the central portion 112, it is understood that other sizes of nails may be used within the scope of the invention.

The housing 110 is provided with interlocking means so that one modified clip can be interlocked with an adjacent modified clip which interlocking means correspond to the interlocking means described above. The interlocking means comprise spaced apart ribs 148, 150 and 152 on the front surface 154 of the central portion 112 and spaced apart grooves 156, 158 and 160 formed in the rear surface 162 of the central portion 112 which ribs and grooves have the same structure and function as the ribs 60 and 62 and the grooves 64 and 66.

The cycle of operation during the application of a modified clip C 1 over a cable is the same as that described above in relation to a clip C and illustrated in Figs. 8 — 11. Fig. 15, which is similar to Fig. 10, shows a modified clip C 1 that has just been fastened to the surface 98 and is still attached to an adjacent modified clip C 1.

In Fig. 16, there is illustrated another embodiment of the invention wherein the front surface 38 of the clip C 2 has one interlocking rib 162 and one interlocking groove 16 and the rear surface 40 has one interlocking rib 166 and one interlocking rib 168. As illustrated in Fig. 16, the interlocking ribs and grooves are located so that adjacent housings may be interlocked with two front surfaces in contact, two rear surfaces in contact or a front and a rear surface in contact. It is understood that other arrangements of the interlocking ribs and grooves are within the scope of the invention.

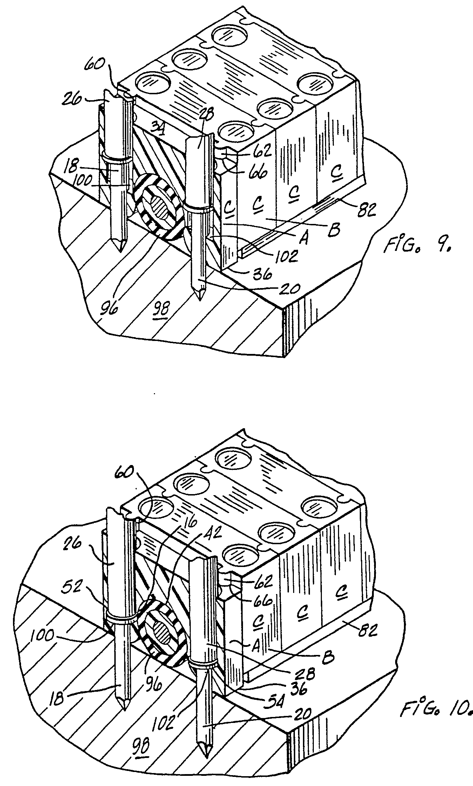

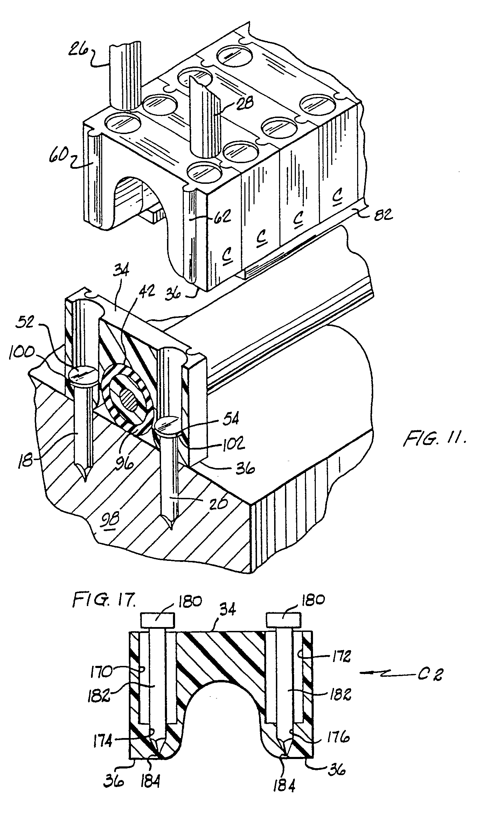

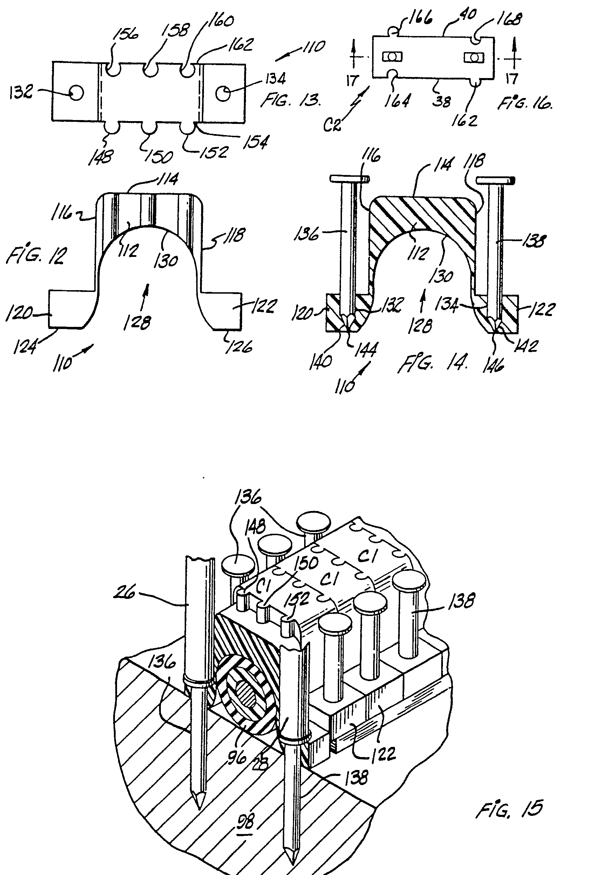

The bore means illustrated in Figs. 16 — 18 have upper portions 170 and 172 having a transverse cross-sectional configuration that is rectangular and lower portions 174 and 176 having a transverse cross-sectional configuration that is circular. A surface penetrating fastening device for use in the modification of the invention illustrated in Figs. 16 — 18 comprises as T-nail 178 that is illustrated in Figs. 19 — 21. The T-nail 178 has a head 180 having a transverse cross-sectional configuration that is rectangular and only slightly smaller than the transverse cross-sectional configuration of each of the upper portions 170 and 172 of the bore means. The shaft 182 of the T-nail 178 has a transverse cross-sectional configuration which is circular and has a diameter slightly greater than the diameter of the lower portions 174 and 176 of the bore means to provide for a frictional fit therebetween.

The modifications of the invention illustrated in Figs. 17 and 18 are useful when the installation conditions require the use of surface penetrating fastening devices having a length greater than the length of the bore means. In Fig. 17, the tip 184 of the shaft 182 is located in the same position as illustrated in Figs. 5 and 14 but the head 18 is above the top surface 34. The distance that the head 180 is above the top surface 34 depends on the required length of the surface penetrating fastening device. In Fig. 18, the head 180 is within each of the upper portions 170 and 172 of the bore means and the tip 184 of the shaft 182 is below the bottom surface 36 of the clip. The distance that the tip 184 is below the bottom surface 36 depends on the required length of the surface penetrating fastening device. If desired, the head 180 can be above the top surface 34 and the tip 184 below the bottom surface 36.

The cycle of operation during the application of a modified clip C2 over a cable is the same as that described above in relation to clip C and illustrated in Figs. 8 — 11. During the driving of the T-nails 178, the head 180 thereof in cooperation with the sidewall of an associated upper portion 170 or 172 and the shaft 182 in cooperation with the sidewall of an associated lower portion 174 or 176 from spaced apart guide means to ensure that the head 180 is properly positioned to be struck by the hammer portions 26 and 28.

## Claims

1. For use in a system for fastening a cable on a support surface by means of a cable accommodating clip applied by an applicator tool, a plurality of clips (10), severably retained in a row in abutting side-by-side relationship, each clip (10) having a channel (16) in its bottom surface for receiving the cable and surface penetrating fastening devices (18, 20) mounted in respective bores (12, 14) in the bottom surface of the clips, characterized in that juxtaposed clips (10) in said row are held together by an interlocking rib and groove arrangement (60, 62, 64, 66) such that the end clip (A) remains attached to the row of clips during application of the clip to an underlying support surface while permitting said end clip (A) to slide with respect to the next following clip (B) in the row subsequently to permit total disengagement of said applied end clip by raising the remaining clips in the row.

2. A plurality of clips according to Claim 1 characterized in that the surface penetrating fastening devices have a portion located outside of the respective bores (12, 14).

3. A plurality of clips according to Claim 1 or Claim 2 characterized in that each clip has an interlocking rib (162, 166) and an interlocking groove (164, 168) on each of its front and back faces (38, 40).

4. A plurality of clips according to any preceeding claim characterized in that the interlocking ribs and grooves extend the full depth of the clip.

5. A plurality of clips according any preceeding claim characterized in that each of the surface penetrating devices (18, 20) consists of a nail (18, 20) having a head (52, 54), and each of the bores consists of a portion of slightly greater diameter than the head (52, 54) of the nails (18, 20) and a portion of diameter slightly less than the diameter of the nail shafts (56, 58).

6. A system for use in fastening a cable on a support surface comprising a plurality of clips (10) joined together in a row, each clip (10) having a channel (16) in its bottom surface for receiving the cable and surface penetrating fastening devices (18, 20) mounted in respective bores (12, 14) extending from the top surface to the bottom surface of the clip; an applicator tool (22) including a feed track for supporting the row of clips such that an end clip (A) is positioned at a discharge shoot; the applicator tool (22) also including hammer means (26, 28) for applying a force to the surface penetrating fastening devices (18, 20) of the end clip (A) to drive them out through the bores (12, 14) and into the support surface thereby retaining the end clip (A) on the support surface, characterized in that the clips (10) according to any preceding claim are held together by interlocking ribs and grooves (60, 62, 64, 66) such that the end clip (A) remains attached to the row of clips after operation of the hammer means (26, 28) until the applicator tool (22) is removed by sliding the ribs (60, 62) longitudinally out of the groove (64, 66) between the end clip (A) and the other clip (B) in the row.

7. A system according to Claim 6 characterized in that the surface penetrating fastening devices have a portion located outside of the respective bores (12, 14).

8. A system according to Claim 6 characterized in that each clip has an interlocking rib (162, 166) and an interlocking groove (164, 168) on each of its front and back faces (38, 40).

9. A system according to Claim 6 characterized in that the interlocking ribs and grooves extend the full depth of the clip.

10. A system according to Claim 6 characterized in that each of the surface penetrating devices (18, 20) consists of a nail (18, 20) having a head (52, 54), and each of the bores consists of a portion of slightly greater diameter than the head (52, 54) of the nails (18, 20) and a portion of diameter slightly less than the diameter of the nail shafts (56, 58).

11. A method of fastening a cable on a support surface involving use of the apparatus of claim 6 characterized by the steps of positioning the applicator tool (22) so that the end clip A is in position above the cable, operating the hammer means (26, 28) thereby driving the surface penetrating fastening devices (18, 20) into the support surface and then removing the applicator tool (22) by sliding the ribs (162, 166) out of the grooves (164, 168) between the end clip (A) and its adjacent clip (B) in the row whereby the end clip (A) remains attached to the row of clips until the applicator tool (22) is removed.

## Patentansprüche

1. Für die Verwendung in einem System zum Befestigen eines Kabels oder Seils auf einer Auflagerfläche mittels eines mit einem Anbringwerkzeug angebrachten Befestigungs-Klemmstückes, eine Mehrzahl von Klemmstücken (10), die nebeneinander und aneinanderliegend und voneinander trennbar in einer Reihe gehalten sind, wobei jedea Klemmstück (10) in seiner unteren Fläche eine Vertiefung (16) zur Aufnahme des Kabels oder Seils besitzt und in eine Oberfläche eintreibbare Befestigungseinrichtungen (12, 14) in der unteren Fläche der Klemmstücke in je einer Bohrung (12, 14) montiert sind, dadurch gekennzeichnet, daß in der Reihe einander benachbarte Klemmstücke (10) durch eine Rippe-Nut-Verbindung (60, 62, 64, 66) formschlüssig derart miteinander verbunden sind, daß das Endklemmstück (A) während seines Anbringens an einer darunterliegenden Auflagerfläche mit der Reihe der Klemmstücke verbunden bleibt, aber danach das Endklemmstück (A) gegenüber dem nächstfolgenden Klemmstück (B) der Reihe gleitfähig ist, so daß durch Anheben der übrigen Klemmstücke in der Reihe das angebrachte Endklemmstück vollständig abgelöst werden kann.

2. Mehrzahl von Klemmstücken nach Anspruch 1, dadurch gekennzeichnet, daß die in eine Oberfläche eintreibbaren Befestigungseinrichtungen einen außerhalb der zugeordneten Bohrungen (12, 14) angeordneten Teil haben.

3. Mehrzahl von Klemmstücken nach Anspruch 1 oder 2, dadurch gekennzeichnet, daß jedes Klemmstück auf seiner vorderen und seiner hinteren Fläche (38, 40) je eine Festlegerippe (162, 166) und je eine Festlegenut (164, 168) besitzt.

4. Mehrzahl von Klemmen nach einem der vorhergehenden Ansprüche, dadurch gekennzeichnet, daß sich die Festlegerippen und -nuten über die ganze Tiefe des Klemmstückes erstrekken.

5. Mehrzahl von Klemmstücken nach einem der vorhergehenden Ansprüche, dadurch gekennzeichnet, daß jede der in eine Oberfläche eintreibbaren Einrichtungen (18, 20) einen Nagel (18, 20) mit einem Kopf (52, 54) besitzt und daß jede der Bohrungen einen Teil besitzt, der im Durchmesser etwas größer ist als der Kopf (52, 54) der Nägel (18, 20) und einen Teil, der im Durchmesser etwas kleiner ist als die Nagelschäfte (56, 58).

6. System zur Verwendung zum Befestigen eines Kabels oder Seils auf einer Auflagerfläche mit einer Mehrzahl von Klemmstücken (10), die in einer Reihe miteinander verbunden sind, wobei jedes Klemmstück (10) in seiner unteren Fläche eine Vertiefung (16) zur Aufnahme des Kabels oder Seils und in eine Oberfläche eintreibbaren Befestigungseinrichtungen (18, 20) besitzt, die in je einer Bohrung (12, 14) montiert sind die sich von der oberen zur unteren Fläche des Klemmstückes erstreckt; und mit einem Anbringwerkzeug (22), das eine Vorschubführung besitzt, die dazu dient, die Reihe von Klemmstücken derart abzustützen, daß ein Endklemmstück (A) an einem Austrittsschlitz angeordnet ist; wobei das Anbringwerkzeug (22) ferner eine Schlageinrichtung (26, 28) besitzt, die dazu dient, auf die in eine Oberfläche eintreibbaren Befestigungseinrichtungen (18, 20) des Endklemmstückes (A) eine Kraft auszuüben, um sie durch die Bohrungen (12, 14) heraus in die Auflagerfläche zu treiben und dadurch das Endklemmstück (A) auf der Auflagerfläche festzulegen, dadurch gekennzeichnet, daß die Klemmstücke (10) nach einem der vorhergehenden Ansprüche mit Festlegerippen und -nuten (60, 62, 64, 66) derart zusammengehalten werden, daß nach dem Betätigen der Schlageinrichtung (26, 28) das Endklemmstück (A) mit der Reihe der Klemmstücke verbunden bleibt, bis das Anbringwerkzeug (22) dadurch abgenommen wird, daß zwischen dem Endklemmstück (A) und dem anderen Klemmstück (B) der Reihe die Rippen (60, 62) in der Längsrichtung aus den Nuten (64, 66) herausgeschoben werden.

7. System nach Anspruch 6, dadurch gekennzeichnet, daß die in eine Oberfläche eintreibbaren Befestigungseinrichtungen einen außerhalb der zugeordneten Bohrungen (12, 14) angeordneten Teil haben.

8. System nach Anspruch 6, dadurch gekennzeichnet, daß jedes Klemmstück auf seiner vorderen und seiner hinteren Fläche (38, 40) je eine Festlegerippe (162, 166) und je eine Festlegenut (164, 168) besitzt.

9. System nach Anspruch 6, dadurch gekennzeichnet, daß sich die Festlegerippen und Nuten über die ganze Tiefe des Klemmstückes erstrekken.

10. Syatem nach Anspruch 6, dadurch gekennzeichnet, daß jede der in eine Oberfläche eintreibbaren Einrichtungen (18, 20) einen Nagel (18, 20) mit einem Kopf (52, 54) besitzt und daß jede der Bohrungen einen Teil besitzt, der im Durchmesser etwas größer ist als der Kopf (52, 54) der Nägel (18, 20) und einen Teil, der im Durchmesser etwas kleiner ist als die Nagelschäfte (56, 58).

11. Verfahren zum Befestigen eines Kabels oder Seils auf einer Auflagerfläche unter Verwendung der Vorrichtung nach Anspruch 6 mit folgenden Schritten: das Anbringwerkzeug (22) wird so angeordnet, daß sich das Endklemmstück (A) oberhalb des Kabels oder Seils befindet; durch Betätigen der Schlageinrichtung (26, 28) werden die in eine Oberfläche eintreibbaren Befestigungseinrichtungen (18, 20) in die Auflagerfläche getrieben, und danach wird das Anbringwerkzeug (22) abgenommen, indem zwischen dem Endklemmstück (A) und dem ihm in der Reihe benachbarten Klemmstück (B) die Rippen (162, 166) aus den Nuten (164, 168) herausgezogen werden, so daß das Endklemmstück (A) bis zum Wegnehmen des Anbringwerkzeuges (22) mit der Reihe von Klemmstücken verbunden bleibt.

**Revendications**

1. Pluralité de colliers (10) destinés à être utilisés pour la fixation d'un câble sur une surface de support au moyen d'un collier logeant un câble, appliqué à l'aide d'un outil d'application, maintenus de façon détachable en une rangée dans laquelle ils sont disposés côte-à-côte, l'un contre l'autre, chaque collier (10) comportant un passage (16) dans sa surface de base, destiné à loger le câble et des dispositifs de fixation (18, 20) aptes à pénétrer dans la surface, montés dans des trous respectifs de la surface de base des colliers, caractérisés par le fait que les colliers juxtaposés de ladite rangée sont maintenus ensemble par un agencement comportant des nervures et des gorges (60, 62, 64, 66) qui se verrouillent mutuelllement, de façon telle que le collier (A) d'extrémité reste fixé à la rangée de colliers pendant l'application du collier sur la surface de support sous-jacente tout en permettant audit collier (A) d'extrémité de glisser par rapport au collier suivant (B) dans la rangée, afin de permettre en conséquence un dégagement total dudit collier d'extrémité appliqué, par le soulèvement des colliers restants de la rangée.

2. Pluralité de colliers selon la revendication 1, caractérisés en ce que les dispositifs de pénétration de la surface comportent une partie située à l'extérieur des trous (12, 14) respectifs.

3. Pluralité de colliers selon la revendication 1 ou 2, caractérisés en ce que chaque collier comporte une nervure de verrouillage (162, 166) et une gorge de verrouillage (164, 168) sur chacune de ses faces avant et arrière (38, 40).

4. Pluralité de colliers selon l'une quelconque des revendications précédentes, caractérisés en ce que les nervures et les gorges de verrouillage mutuel s'étendent sur toute la hauteur des colliers.

5. Pluralité de colliers selon l'une quelconque des revendications précédentes, caractérisés en ce que chacun des dispositifs (18, 20) de pénétration de la surface consiste en un clou (18, 20) comportant une tête (52, 54), et en ce que chacun des trous comporte une partie dont le diamètre est légèrement plus grand que la tête (52, 54) des clous (18, 20) et une partie dont le diamètre est légèrement inférieur au diamètre des tiges (56, 58) de clous.

6. Système destiné à être utilisé pour fixer un câble sur une surface de support, comprenant une pluralité de colliers (10) assemblés en une rangée, chaque collier (10) comportant un passage (16) dans sa surface de base, destiné à loger le câble et des dispositifs (18, 20) de fixation destinés à pénétrer dans la surface, montés dans des trous respectifs s'étendant de la surface supérieure à la surface de base des colliers; un outil d'application (22) comprenant une piste d'alimentation destinée à supporter la rangée de colliers de façon telle qu'un collier d'extrémité (A) soit positionné à l'emplacement d'une glissière d'évacuation; l'outil d'application (22) comportant également des moyens (26, 28) formant marteaux destinés à appliquer une force aux dispositifs de fixation (18, 20) devant pénétrer dans la surface du collier d'extrémité (A) pour les enfoncer dans les trous (12, 14) et dans la surface de support afin de maintenir le collier (A) sur la surface de support, caractérisé en ce que les colliers (10) selon l'une quelconque des revendications précédentes sont maintenus ensemble par des nervures et des gorges (60, 62, 64, 66) de verrouillage mutuel de façon telle que le collier d'extrémité (A) reste fixé à la rangée de colliers après que le moyen formant marteau (26, 28) ait fonctionné jusqu'à ce que l'outil d'application (22) soit retiré en faisant glisser les nervures (60, 62) longitudinalement hors des gorges (64, 66) entre le collier d'extrémité (A) et l'autre collier (B) de la rangée.

7. Système selon la revendication 6, caractérisé en ce que les dispositifs de fixation destinés à pénétrer dans la surface comportent une partie située à l'extérieur des trous respectifs (12, 14).

8. Système selon la revendication 6, caractérisé en ce que chaque collier comporte une nervure (162, 166) de verrouillage et une large gorge (164, 168) de verrouillage sur chacune de ses faces avant et arrière (38, 40).

9. Système selon la revendication 6, caractérisé en ce que les nervures et les gorges de verrouillage mutuel s'étendent sur la hauteur totale du collier.

10. Système selon la revendication 6, caractérisé en ce que chacun des dispositifs de fixation (18, 20) destinés à pénétrer dans la surface consiste en un clou (18, 20) comportant une tête (52, 54), et en ce que chacun des trous consiste en une partie d'un diamètre légèrement plus grand que la tête (52, 54) des clous (18, 20) et une partie d'un diamètre légèrement inférieur au diamètre des tiges (56, 58) des clous.

11. Procédé de fixation d'un câble sur une surface de support, comportant l'utilisation d'un appareil selon la revendication 6, caractérisé par les étapes consistant à placer l'outil (22) d'application de façon telle que le collier (A) se trouve au-dessus du câble, à faire fonctionner les moyens formant marteaux (26, 28) en enfonçant de ce fait les dispositifs de fixation (18, 20) destinés à pénétrer dans la surface, de support, puis à retirer l'outil d'application (22) en faisant glisser les nervures (162, 166) hors des gorges (164, 168) situées entre le collier d'extrémité (A) et son collier voisin (B) de la rangée, le collier (A) restant fixé à la rangée de colliers jusqu'à ce que l'outil d'application (22) soit enlevé.

FIG. 1

FIG. 2.

FIG. 4

FIG. 3.

FIG. 5.

FIG. 6.

FIG. 7

FIG. 21.

FIG. 19    FIG.20.

FIG. 8.

FIG. 18.

FIG. 9.

FIG. 10.

FIG. 11.

FIG. 17.

FIG. 13.

FIG. 16.

FIG. 12

FIG. 14.

FIG. 15